# EUROPEAN PATENT APPLICATION

(11) **EP 2 285 086 A2**
(43) Date of publication of application: **16.02.2011**
(21) Application number: 10181138.8
(22) Date of filing: 17.08.2001
(51) Int. Cl.: H04N 1/00, H04N 5/44

(54) **A dynamic shot printing system**

(30) Priority: 17.08.2000 JP 2000247743
(62) Divisional of application: 01307019.8
(71) Applicant: DAI NIPPON PRINTING CO., LTD., Tokyo-to 162-8001 (JP)
(72) Inventor: Ando, Jitsuhiko, Tokyo-to 162-8001 (JP); Ohkubo, Takayuki, Tokyo-to 162-8001 (JP); Shibasaki, Naoji, Tokyo-to 162-8001 (JP)
(74) Representative: Needle, Jacqueline

(57) **Abstract**

A dynamic-shot printing system has a dynamic image data procurement means (111) for obtaining a dynamic image data. There is also a static image data specifying means (112) for specifying a scene recorded in the dynamic image data as the static image. A customer uses an order inputting means (113) for inputting orders for an image to be output. Output content designation data producing means (114) prepares an output content designation datum which records the image to be output and appends conditions for the image on the basis of the obtained static image data and the input orders. A printing means (115) prints out a printed article of the image in accordance with the output content designation datum.

## Description

The present invention relates to a dynamic shot printing system.

In order to print out one scene (hereinafter, it may be called "dynamic-shot" or a "shot image") included in a dynamic image photographed with a digital camcorder, a digital camera, etc. as a still picture, a digital datum to be recorded as the desired scene for static image from the dynamic image digital data is specified, and a still image is printed out based on this static image data.

Such work can be done using a personal computer and printer at a home. Alternatively, once one scene included in a dynamic image is specified by using the personal computer at a home, it is possible for the data of the specified shot image to be recorded on a recording medium, and to be brought to a processing laboratory (lab) in order to be printed as a still picture.

However, in order to print a shot image from a dynamic image data using a lab, it is necessary to specify the scene it is wished to print as a still picture from the countless scenes included in the dynamic image, and to tell the clerk of the lab about it. For that purpose, a shot image to be printed should be specified by using a personal computer at home and the datum of shot image should be digitalized to be recorded on a recording medium in order to carry it into the lab. Alternatively, the dynamic image data on a recording medium should be carried into the lab, then the dynamic image data should be reproduced on a monitor in front of the clerk of the lab in order to point out the scene to be printed to the clerk. These are inconvenient anyway.

Although the post type image outputting apparatus as described above can be operated freely by a customer, in order to print out a desired photograph image instantaneously and with ease, it does not have the function which prints out such a shot image.

Furthermore, the shopping center etc. does some unique services offered to customer, such as an information service of the recommended goods by insertion of a newspaper etc., a point service wherein points are given to the customer in proportion to the customer's usage of the shopping center, and any service such as reduction in price, etc., is made according to the given points.

These services are not restricted to such a shopping center, but are performed in various types of industry. For example, such service is made on the DPE print store which develops a photograph. In a DPE print store, if a customer orders a print, points will be given to him according to the fee of print. Once the points accrued by the customer attains a fixed point, the print fee will be discounted according to the fixed point. Alternatively, as the service, an enlarged photograph etc. would be given with no charge.

Moreover, in recent years, by using the Internet etc., while performing advertisement of stores (shopping center etc.), a service where a coupon (discount ticket) etc. can be issued by a operation on the browsing screen is offered.

However, when a customer uses the mentioned image printing apparatus, in the present condition, such additional service is not given. Thus, there is a large service gap between the case of using such image printing system and the case of using DPE print store, etc.

Moreover, the printing apparatus has the advantage that it can install anywhere, even in a small space. Therefore, once the printing apparatus is installed in a shop, and it uses for performing advertisement of the shop to the customer using printing apparatus, it is expected that it can perform timely and effective advertisement.

The present invention seeks to provide an image printing system which prints a shot image by specifying one scene out of dynamic image contents.

According to the present invention, there is provided a dynamic-shot printing system comprising:
a dynamic image data procurement means for obtaining a dynamic image data,
a static image data specifying means for specifying a scene recorded in the dynamic image data as the static image,
an order inputting means for inputting orders for an image to be output,
an output content designation data producing means for preparing an output content designation datum which records the image to be output and appendix conditions for the image on the basis of the obtained static image data and the input orders, and
a printing means which prints out an printed article of the image in accordance with the output content designation datum.

As dynamic image data can be processed easily, and as the selected shot image contained in a dynamic image can be printed as it is or it can be printed after it has received advanced image processing, an image printing system and printed article which enjoy a high added value can be provided.

Preferably, editing means are included for editing the specified static image datum to the image to be output.

By establishing such an editing means, it can not only print the static image specified from the dynamic image data as it is, but also a newly processed static image data on the basis of the specified static image., Therefore, the shot image with high added value can be printed.

In an embodiment, the system further comprises an static image inputting means for inputting a static image datum, in addition to a dynamic image inputting means for inputting a dynamic image datum as the dynamic image procurement means.

Preferably, the system further comprises an static image database for storing static image data, in addition to a dynamic image inputting means for inputting a dynamic image datum as the dynamic image procurement means.

The system may further comprise an static image inputting means for inputting a static image datum, in addition to a dynamic image database for storing dynamic image data as the dynamic image procurement means.

Preferably, the system further comprises an static image database for storing static image data, in addition to a dynamic image database for storing dynamic image data as the dynamic image procurement means.

The dynamic image procurement means may comprise a dynamic image inputting means for inputting a dynamic image datum and a dynamic image database for storing dynamic image data.

The static image data specifying means may comprise dynamic image viewing means for playing the input dynamic image datum and displaying the dynamic image, and a static image selecting means for selecting a scene displayed in the dynamic image viewing means as the static image datum.

The dynamic image viewing means may further comprise a playback speed control means for controlling the playback speed of reproduced dynamic image to be in slow motion or frame-by-frame advance at a choice timing.

The dynamic image viewing means may also comprise a photographic playback producing means for converting the reproduced dynamic image into a photographic playback at a choice timing.

The dynamic image viewing means may further comprises a pausing means for pausing the reproduced dynamic image at a choice timing.

The static image data can be more easily chosen by combining any two or all of the playback speed control means, a photographic playback producing means, and the pausing means.

The static image data specifying means may comprise a static image data storing means for storing 2 or more static image data while giving a storing number in order to each image datum.

The static image data storing means may comprise a storing adjustment means which can delete a part of or all of stored static image data, and modify the storing number.

The static image data storing means may comprise a pre-view displaying means for displaying images of the stored static image data in order of storing.

The editing means is capable of editing separately 2 or more static image data stored in the static image storing means into the corresponding number of images to be output as printed articles.

Moreover, the editing means is capable of editing 2 or more static image data stored in the static image storing means into a pre-view image as the image to be output which displays the stored static images within a screen.

Embodiments of the present invention will hereinafter be described, by way of example, with reference to the accompanying drawings, in which:-
Fig. 1 shows the outline of an image printing system;
Fig. 2 illustrates one embodiment of the image printing system of Fig. 1;
Fig. 3 is a perspective diagram of an example of apparatus for carrying out the image printing system;
Fig. 4 is a block diagram showing an embodiment of the image printing system;
Fig. 5 is a flow chart which shows the first half of a procedure of a digital photograph in an embodiment of the image printing system;
Fig. 6 is a flow chart which shows the second half of a procedure of a digital photograph in an embodiment of the image printing system;
Fig. 7 is a flow chart which shows the first half of a procedure of frame synthesis;
Fig. 8 is a flow chart which shows the first half of a procedure of a seal print;
Fig. 9 is the screen which the kind of original data specifies;
Fig. 10 is the screen which specifies a printed article to be output;
Fig. 11 is the screen which chooses image data's reading source;
Fig. 12 is a screen for specifying static image data from dynamic image data;
Fig. 13 is another screen for specifying static image data from dynamic image data;
Fig. 14 is the screen which sets up the print number of sheets of a image;
Fig. 15 is another screen which sets up the print number of sheets of a image;
Fig. 16 is a guidance screen under print execution;
Fig. 17 is the expansion display screen of the selected frame;
Fig. 18 is the operation screen which adjusts the synthesized image of frame synthesis;
Fig. 19 is the screen which specifies a printed article to be output;

The present application is divided from European application EP1182862. Descriptions and drawings have been omitted for conciseness from this application and reference is made to the examples and embodiments described in the parent case.

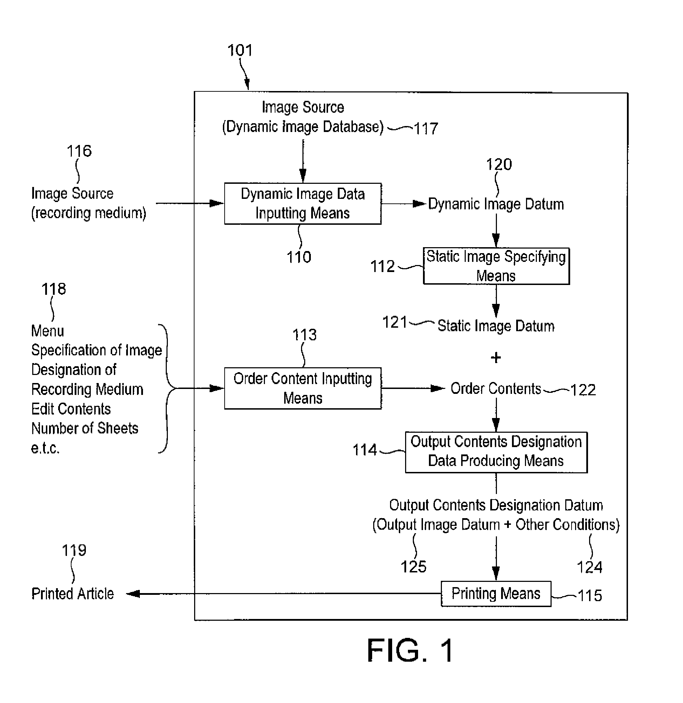

Figure 1 illustrates a dynamic shot printing system 101 including dynamic image data procurement means 111 which can receive dynamic image data (image data which recorded the dynamic image) from a source of a dynamic image data, for example, a dynamic image data inputting means which can be read a dynamic image data in the recording media 116, or which photographs an actual motion and makes it digital datum and thus obtains a dynamic image data, or a dynamic image database 117 which memorizes one or more dynamic image data, and can take out a desired dynamic image data suitably may be cited. The dynamic image database could be built in memory storage, such as a hard disk of a computer, and may be equipped with the retrieval means which can choose a favorite thing easily out of many dynamic image data. Moreover, the dynamic image database 117 may be installed in this printing system, and uniting with the dynamic image data procurement means 111, or the dynamic image database 117 may be constructed as dynamic image source independent from this printing system.

The dynamic image data 120 received by the dynamic image data procurement means 111 is transmitted to a static image data specifying means 112, and one or more scenes which are included in the dynamic image are specified as static image data 121.

Directions for selection of a print menu, specification of the recording medium used as dynamic image source, specification of static image datum, the existence of edit, the contents of edit, print number of sheets, etc. are input into this printing system 101 by the order inputting means 113, and it is recognized as order contents 122.

The specified static image datum 121 and some of order contents 122 are transmitted to the output content designation data producing means 114, and the output content designation datum 123 which consists of the image datum which records the image to be output and other conditions accompanying to the image datum is generated. When there are no directions of edit in order contents as image datum to be output, the static image datum 121 is recognized as image datum 124 to be output as it is. When directions of edit are included in order contents, according to the concrete contents of edit, the static image datum 121 synthesizes with materials, such as a frame, or two or more static images are arranged on the screen of one sheet for synthesizing a preview image, and expansion, movement, rotation, modification, or other processings of image are performed. Thus, the image data 124 to be output is edited. As conditions which accompany to the image data to be output, directions for use of print number of sheets and use of the mount for pre-cut seals etc. are included, for example.

The generated output content designation data 123 is transmitted to the printing means 115, the print of a image is performed here, and the printed article 119 of a shot image is obtained.

The dynamic image data can be easily processed, and as the shot image contained in a dynamic image can be printed as it is or after performing advanced image processing on it, an image printing system and a printed article both having high added value are offered.

It is desirable to establish editing means for editing the specified static image datum to the image to be output in the output content designation data producing means 114 of the dynamic image shot printing system. Since it not only prints the static image specified from the dynamic image data by establishing such an editing means as it is, but it can process static image data and a image can be edited newly, the shot image with high added value can be printed.

By combining freely the original dynamic image contents and/or original static image contents brought by a user with dynamic image contents and/or static image contents possessed by the system or originally obtainable by the system side, a new image can be easily synthesized and easily printed out.

For example, whilst providing a dynamic image data inputting means to input a dynamic image data as a dynamic image data procurement means 111, a static image data inputting means to input static image data can be further established. The customer inputs a dynamic image data into this printing system by the dynamic image data inputting means, and a favorite static image datum from the dynamic image data is specified by the static image data specifying means 112. In parallel to this, an image datum, such as a static image photographed with the digital camera may be input into this printing system by the static image data inputting means as a second static image datum. Then, the first static image datum which is specified from the dynamic image data and the second static image datum are synthesized by the above mentioned editing means. Thus, a new image (this is also called "shot image") is edited, and can be printed by the printing means 115.

Alternatively, whilst providing a dynamic image data inputting means to input a dynamic image data as a dynamic image data procurement means 111, the static image database which accumulates static image data can be further provided. Thus, the customer inputs dynamic image data into this printing system by the dynamic image data inputting means, and specifies favorite static image datum from the dynamic image data by the static image data specifying means 112. In parallel to this, a second static image data comes to hand from the static image database. And the first static image data specified from the dynamic image data and the second static image data are synthesized by the above mentioned editing means, thus a new image is edited, and it can be printed by the printing means 115.

A static image database can be built in memory storage, such as a hard disk of a computer, and a retrieval means may be added so that a favorite static image can be chosen easily. As the static image database, various kinds of material databases used for frame synthesis can be exemplified. The static image database may be formed in this printing system, or may be formed independently from this printing system.

Furthermore, whilst forming the dynamic image database which accumulates a dynamic image data as a dynamic image data procurement means 111, a static image data acquisition means to input static image data can be prepared. Thus, the customer receives dynamic image data from the dynamic image database, and specifies favorite static image datum from the dynamic image data by the static image data specifying means 112. In parallel to this, an image datum, such as a static image photographed with the digital camera is input into this printing system by the static image data inputting means as second static image datum. The first static image datum which is specified from the dynamic image data and the second static image datum are synthesized by the above mentioned editing means, thus, a new image is edited, and it can print by the printing means 115.

Furthermore, whilst forming a dynamic image database which accumulates a dynamic image data as the dynamic image data procurement means 111, a static image database which accumulates static image data can be further provided. Thus, the customer receives a dynamic image data from the dynamic image database, and specifies favorite static image datum from the dynamic image data by the static image data specifying means 112. Moreover, in parallel to this, the second static image datum comes to hand from a static image database. And the first static image datum which is specified from the dynamic image data and the second static image datum are synthesized by the above mentioned editing means, thus a new image is edited, and it can print by the printing means 115.

Furthermore, a dynamic image data inputting means to input a dynamic image data, and the dynamic image database which accumulates a dynamic image data can be formed both as a dynamic image data procurement means 111. Thus, when it constitutes, a static image datum specified from the dynamic image data input by the dynamic image data inputting means and the second static image datum specified from the dynamic image data which came to hand with the dynamic image database are synthesized by the above mentioned editing means, a new image is edited, and it can print by the printing means 115.

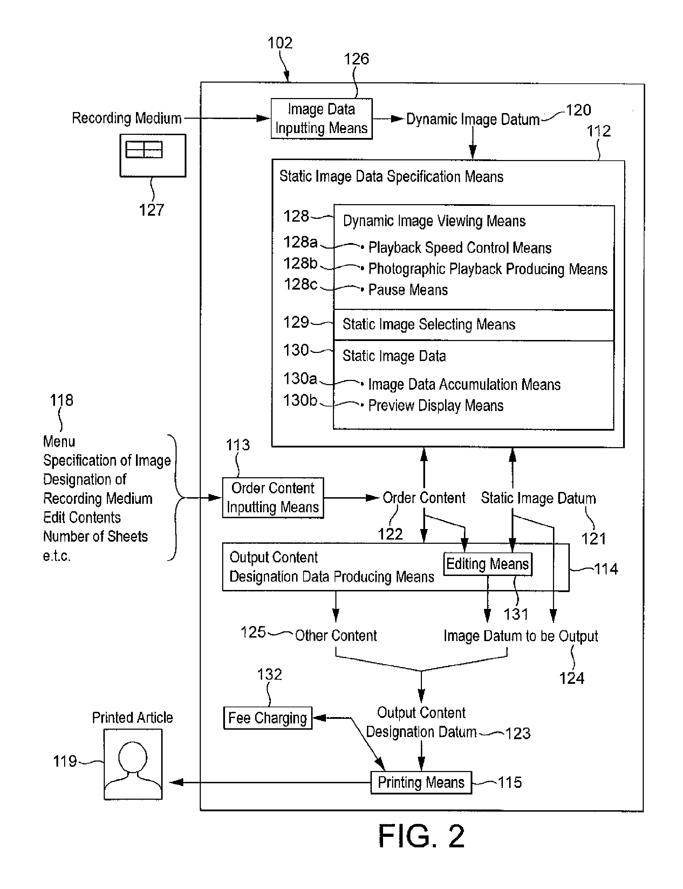

An embodiment of a dynamic image shot printing system 112 is shown in Fig. 2. The dynamic image shot printing system 102 has an image data inputting means 126 to input a dynamic image data. The static image data specifying means 112 specifies one scene of the dynamic image currently recorded into the input dynamic image data as image data of a static image (static image data).

In order to print a desired shot image using the dynamic image shot printing system 102, first, image data 120, i.e., the dynamic image data, which recorded the dynamic image is input into the dynamic image shot printing system 102 by using the image data inputting means 126. Usually, by inputting the order contents relevant to this printing system 102 from the order inputting means 113, the image data inputting means 126 is operated and the dynamic image data is input. However, when the recording medium 127 which recorded the dynamic image data is inserted in the reader of this printing system 102, it is possible to set up so that the image data inputting means 126 may operate automatically to start the reading of a dynamic image data.

Although the dynamic image data to be input is the dynamic image which is mainly took with the digital camcorder or the digital camera, and is recorded on a certain recording media as a digital datum, but it is not limited to thereto. For example, it may be the dynamic image of the computer graphics created with the personal computer, and when this printing system is equipped with image pick-up apparatus, such as a CCD camera, as an image data inputting means, the dynamic image datum may be a motion or performance which are actually performed in front of this printing system.

As the image data inputting means 126, for example, reading machines corresponding to each recording medium, such as a compact flash memory (CF), a smart medium, a compact disc (CD), a magneto-optic disc (MO), a flexible disc (FD), and a PC card, a connector to be connected with a digital camcorder, capable of reading dynamic image data from a memory of the digital camcorder, can be used. As the image data inputting means 111, an image pick-up apparatuses, such as a CCD camera which can photograph a motion or performance which are actually performed in front of this printing system and can convert it into a digital datum may be used. The enjoyableness of this printing system may increase when including the image pick-up apparatus which can photograph a dynamic image in addition to the reading apparatus of recording media in the image data inputting means 126. It is preferable to include a plurality of reading devices of different kinds in the image data inputting means 126 in order to improve the applicability of the dynamic shot printing apparatus of the present invention. Moreover, the image data inputting means 126 may be equipped with the function of both a dynamic image data inputting means and a static image data inputting means. That is, an image data inputting means enables not only to receive the input of a dynamic image, but also to receive the input of a static image such as the photograph image photographed by a digital camera, an illustration created by computer graphics, and to process them like the static image data specified from the dynamic image in the subsequent process, and may enable it to create a printed article.

The order contents about the image to be output are input into this printing system 102 by using the order inputting means 113. The alternatives of order contents are prepared in advance at the printing system side, the customer can choose freely any order from the prepared items. It is desirable to show a customer the order contents which can be chosen on a display means (not shown). and to guide input operation of order contents. As a display means, although CRT, a liquid crystal panel, etc. are used commonly, it may be simpler one like the bulletin board which itemized the operation method.

In the alternatives of order contents, for example, those of specifying the image to be output, such as an option for which scene in a dynamic image to be printed, an option for which the specified scene (static image) should be printed as it is or should be further processed, or an option for how the static image should be processed, and those of appertained to the image datum when shot image is printed, such as decisions of the print number of sheets, print size, or using or not using a particular print like a pre-cut seal, etc., may be included.

Order contents may be input at any time according to advance of operation after starting operation of this printing system until print-out is completed. For example, since the indication about the printing the read image as it is, or after processing, and the indication about the particular printing such as pre-cut seal, etc., would belong to the alternatives in the main menu, they would be input at the time of starting of this printing system operation. The determination of which scene in a dynamic image to print would be input after reading a dynamic image data into this printing system. The direction of how to process the specified static image data would be input after specifying static image data. Further, the setting of print number of sheet would be input after processing of static image data and the image datum to be output is produced or after the static image datum itself is recognized as the datum to be output. Therefore, the order inputting means 113 is performed at any time if needed in the operation process of this printing system.

As the order content inputting device 113, for example, various kinds of pointers such as a touch panel provided integrally with a display device such as a CRT, and a liquid crystal panel, a keyboard, a mouse, and a track ball, can be used. Moreover, the DPOF function (digital print order format) provided in a digital camera can be used as well.

When a dynamic image data 120 is input, the static image data specifying means 112 is performed in this printing system 102, and the static image datum 121 which records the image used as a shot image to be output or to be used as its material is specified from of the countless scene included in a dynamic image. The static image data specifying means 112 is operated by inputting any required directions from the order inputting means 113. The static image data specifying means 112 is equipped with the dynamic image viewing means 128 for reproducing a dynamic image normally to display the contents on a dynamic image display part (not shown), and the static image selection means 129 which can choose any desirable scene arbitrarily while checking the contents of a dynamic image with the dynamic image viewing means 128. In addition, when there is no reference especially in this description and claims, reproduction of a dynamic image should be understood as a concept also including reverse reproduction (reproduction with rewinding).

The dynamic image viewing means 128 may be provided with a playback speed control means 128a which can change playback speed into a slow motion or frame-by-frame advance to arbitrary timing during reproduction of a dynamic image. A best shot can be easily chosen by reducing the playback speed of a dynamic image by the playback speed control means when the dynamic image reaches a little before the best shot, and pushing the selection button as a static image selection means 129 when the image of a best shot is displayed on a dynamic image display part. It is further desirable that the playback speed control means further has a fast-forward and/or fast-rewind functions since the reproduction time of an unnecessary portion can be omitted or shortened.

Moreover, the dynamic image viewing means 128 may be provided with a photographic playback producing means 128b which can change the dynamic image under reproduction into photographic playback at a choice timing. When the button as photographic playback producing means 128b is pushed at the arbitrary times while reproducing the dynamic image, the dynamic image stops at the time when the button is pushed, and a photographic playback is displayed by package at the dynamic image display part (not shown). The photographic playback includes a series of picture frames within a predetermined time range or of a predetermined number of frames which starting point, middle point, or end point is based on the time when the button is pushed. Each picture frame of the photographic playback displayed at the dynamic image display part serves as a touch panel, and after the customer touches and specifies a position to be desired, by pushing the button as a static image selection means 129, a best shot can be chosen easily.

Moreover, the dynamic image viewing means 128 may be provided with an pausing means 128c which can stop the dynamic image under reproduction to arbitrary timing. If the button as pausing means 128c was pushed when a best shot was displayed on the dynamic image display part(not shown), a dynamic image stops at the time when the button is pushed, and a best shot is fixed. Thus, a best shot can be easily chosen by pushing the selection button as a static image selection means 129 in the state.

Static image data can be more easily chosen now by combining any two or all of playback speed control means 128a photographic playback producing means 128b, and the pausing means 128c. The case where playback speed control means 128a and pausing means 128c are combined is especially preferable, since a best shot can be particularly easily chosen by reducing the playback speed of a dynamic image by the playback speed control means 128a when the dynamic image reaches a little before the best shot, and then the best shot was hold by pushing the pausing means 128c so as to pause the replay of a dynamic image, and the hold best shot is fixed by pushing the selection button as a static image selection means 129.

In addition, when the timing which operates the static image selection means 129 shifts, it is possible to redo any number of times and the static image data of a best shot is able to be chosen until it canceled the static image data chosen accidentally and went satisfactorily, it can specify as static image data which should be delivered to a output content designation data producing means to mentioned below. In this case, after rewinding a dynamic image to a suitable scene, the same operation as the above may be repeated, or reverse reproduction, an reverse slow motion, or frame-by-frame back is performed, and a best shot may be displayed, optionally by making it stop by the pausing means, and it can be chosen.

As for the static image data specifying means 112, it is desirable to have further the static image data accumulation means 130 which can accumulate two or more static image data. When the static image data specifying means 112 is equipped with the static image data accumulation means 130, the candidate of the static image to be output as the shot image , or used as its material can be chosen one after another, it accumulates temporarily, and after that, each candidate is fully compared and, finally the most desirable static image datum can be specified. Moreover, the package print of the shot image of two or more scenes can also be carried out in one procedure by accumulating two or more static image data in the static image data accumulation means 130, and processing whole accumulated data in parallel at the editing means and the printing means mentioned below. Moreover, it can arrange on one screen all static image data accumulated in the static image data accumulation means 130, then the preview image are edited, and the edited preview image can be printed by the printing means.

It is desirable to prepare preview display means 130b which displays the image of the accumulated static image data on the static image data accumulation means 130, and to enable it to check an accumulation situation easily.

Usually, the static image data accumulation means 130 accumulates two or more static image data with attaching accumulation ranking which is given according to the ascending order of the specific time of static image data. It becomes easy to access each accumulated static image data by attaching accumulation ranking according to the specific time of static image data. Moreover, while reproducing a dynamic image, when two or more static image is specified one after another and are accumulated in order according to the ascending order of the specific time of the static image, each scene in a dynamic image comes to arrange along time series. Thus, it is possible to prepare a playback photography by arranging the static images in order of accumulation.

The static image data accumulation means 130 may be provided with an accumulation adjustment means 130a which can delete some or all of static image data or change the accumulation ranking. By establishing such an accumulation adjustment means, substitution of the accumulated static image data becomes easy. Particularly, since only a static image with a bad relation condition with the scene of order can be easily substituted when editing the preview image of playback photography, it is far efficient rather than it redoes the selection work of static image data from the start. Furthermore, according to the accumulation adjustment means, since it is possible to arrange each static image in an order which is not related to a motion of an actual dynamic image, it is possible to produce a preview image which has an unique characteristic distinct from the playback photograph of dynamic image wherein each scene is arranged along the time series.

It is desirable to add to the accumulation adjustment means 130a a function which can give arbitrary accumulation ranking when choosing new static image data. When accumulation adjustment means 130a has such a function, the newly chosen static image data can be directly inserted in arbitrary accumulation ranking in a relation with 1 or more static image data which have already been accumulated.

The static image data specifying means 112 containing the dynamic image viewing means 128, the static image selection means 129, and static image data accumulation means 130 are realizable by executing the program stored in memory storage, such as a memory and a hard disk, with the computer.

If required order contents are input into this printing system 102 by the order inputting means 113 while 1 or more static image data 121 are specified by the static image data specifying means 112, the output content designation data producing means 114 will be performed. Consequently, based on some of static image data 121 and order contents 122, the output content designation data 123 which comprises the image data 124 to be output and the data 125 which recorded the other appendix conditions would generate,

Here, as the additional new order content which are input in order to generate the output content designation data, there are the concrete contents of edit for processing print number of sheets and static image data, for example. The directions about the trimming of a image, expansion/reduction, synthesis with the material of a frame or others, the whole layout, etc. are included in the contents of edit. The appendix conditions 125 which accompany the image data to be output are contents which is necessary for directing with image data to a printing means so that a printed article is outputted as order, and for example, items, such as a kind of print number of sheets, size, and paper, are included.

The static image data 121 and the order contents 122 transmitted to the output content designation data producing means 114, when the directions which should process a static image are included in order contents, are delivered to the editing means 131 with which the output content designation data producing means 114 was equipped, and edition is performed, and the image data 124 recorded in the image to be output generates. When the directions which should print the static image recorded on the static image data specified as order contents by the above mentioned static image data specifying means 112 as it is are included, the static image data 121 itself is recognized as image data 124 which records the image to be output at the output content designation data producing means 114. Moreover, some order contents are recognized as conditions 125 which accompany the image data 124 to be output.

The editing means 131 is realizable by executing the program stored in memory storage, such as a memory and a hard disk, by computer. Moreover, the materials, such as a frame design which is synthesized with the a static image in edition, can accumulate in a material database which can construct in memory storage, such as a hard disk of a computer. When an advanced edit function is not required to the dynamic image shot printing system of this invention, and only to choose a best shot from a dynamic image, and to print it as it is is required, the editing means 131 may be omitted.

The output content designation data 123 generated by the output content designation data producing means 114 is transmitted to the printing means 115, and a shot image is printed as order. As the concrete output method of the printing means 115, for example, an outputting method suitable for printing based on digital image data, such as the sublimation type thermal transfer method, the melting type thermal transfer method, and the ink jet, can be utilized.

In the image printing system 102 a fee charging means 132 may be provided for collecting the fee for outputting and providing an image. In case the fee charging means is provided, the fee charging means is driven after driving the order content inputting device, more preferably after driving the image editing means 131 if the image editing is performed and before outputting a printed article by the drive of the printing means 115. It is preferable to show the amount to be collected by the fee charging means to a user on the display device (not shown) together with the order content.

When the customer inserts a bill and/or a coin in the fee charging means according to the guide of the amount display by the display device, the fee charging means calculates the accepted amount and returns the change if any.

The fee collection means 132 can be constituted combining suitably a coin and bill discernment device, change return device, the computer that manages a fee collection state.

A receipt producing means may be provided in the fee charging means. The receipt producing means automatically produces the receipt having the collected amount and the order content printed thereon after completing the fee collection by the fee charging means. The receipt producing means may further comprise a receipt producing eliminating means so that the producing of the receipt can be eliminated selectively in case the customer does not need the receipt. In this case, after completing the collection of the fee, an operation guidance "Would you like a receipt published?" or the like is displayed on the display device (not shown) so that the user presses a corresponding touch panel button or keyboard for executing the choice of producing or not producing.

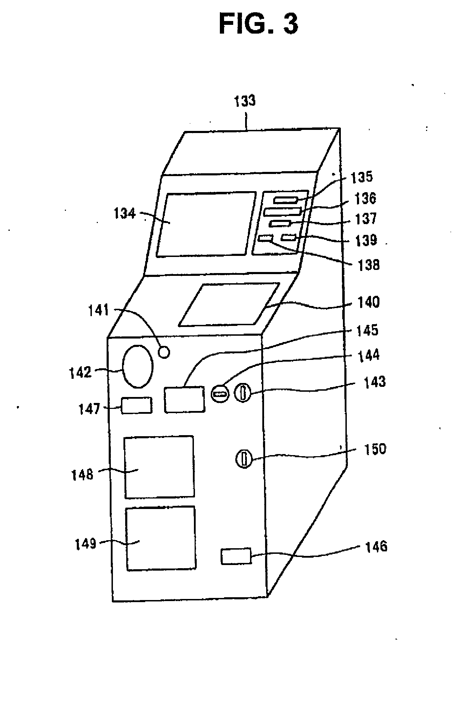

Fig. 3 shows the external appearance of a post type image outputting apparatus 133 used as the printing system 102. In Fig. 3, a screen of a monitor 134 with a touch panel is disposed on the upper front surface of the post type image outputting apparatus 133. The monitor 134 with a touch panel may be a CRT or liquid crystal panel. The monitor 134 with a touch panel performs as a display device for displaying the operation guidance, the operation state, the read out dynamic image, specified static image, the processed image or the like as well as a device for the inputting operation for inputting an order content including the search items of the event information or the like.

Insertion ports 135 to 139 for various recording media are provided sideways to the monitor 134 with a touch panel A scanner reading surface 140 is provided on a horizontal part dividing the upper part and the lower part for reading the image of a printed article and processing the same to digital data. In this embodiment, these are a part of the image data inputting means. In this embodiment, as the insertion ports for the various recording media, specifically, a flexible disc insertion port 135, a CD-ROM insertion port 136, a PC card insertion port 137, a smart medium insertion port 138, and a compact flash insertion port 139 at a position on the whole. Moreover, the main bodies of each reading device are installed inside the housing of the post type image outputting apparatus 133 corresponding to the insertion port of each recording medium. A shutter (not shown) may be provided on each insertion port so that the recording medium cannot be taken out until collection of the fee is completed.

In the lower part of the post type image outputting apparatus 133, a maintenance key 141, a speaker 142, a coin insertion port 143, a coin return lever 144, a bill insertion port 145, a change return port 146, a receipt outlet port 147, a printed article (for standard printing) outlet port 148, a printed article (for pre-cut seal) outlet port 149, and a front door opening/closing key 150 are disposed. The maintenance key 141 is a key for switching an ordinary drive mode capable of accepting a customer, and an administration mode for setting the image printing system or maintenance by an administrator. The speaker 142 is for reproducing the sound, BGM, effect sound or the like while waiting or operation.

The coin insertion port 143, the coin return lever 144, the bill insertion port 145, and the change return port 146 constitutes a part of the fee charging means. A customer would pay for the fee by inserting a coin in the coin insertion port 143 and/or inserting a bill in the bill insertion port 145. In case there is a change, it is discharged from the change return port 146 so that it is received by the customer. Moreover, In case a coin is choked, it is discharged from the change return port 146 by turning the coin return lever 144 so that it is received by the customer.

The receipt outlet port 147 constitutes a part of the receipt producing means and the order receipt note producing means. After collecting the fee by the fee charging means, a receipt with the collected amount and the order content printed is discharged from the receipt outlet port 147.

The printed article (for standard printing) outlet port 148 and the printed article (for pre-cut seal) outlet port 149 constitute parts of the printing means. After the customer inputs the command for printing, by touching any button of the touch panel, or so, the customer may receive a printed article discharged from the printed article outlet port 148 or the printed article outlet port 149.

By turning the front door opening/closing key 150, the front door is opened so that the maintenance work for each device installed inside the housing can be executed. In the housing of the post type image outputting apparatus 133, each main body is installed corresponding to the screen of the monitor with a touch panel, the insertion port, and the scanner reading surface. A volume adjusting part is installed corresponding to the speaker 142. Corresponding to the coin insertion port 143, the coin return lever 144, the bill insertion port 145, and the change return port 146, a coin mech (coin processing device) for identifying the coins, storing, and returning the change, a bill bari (bill processing device) for identifying the bills, and storing, and a safe for storing the coins in case the coin mech is fill, are installed. Corresponding to the receipt outlet port 147, a receipt printer is installed. Furthermore, corresponding to the printed article outlet port 148, and the printed article outlet port 149, a printer is installed respectively.

Moreover, although it is not apparently recognized by the external appearance, inside the housing of the post type image outputting apparatus 133, a personal computer including a control unit for controlling each device in the image outputting apparatus 133, a power source box for converting the voltage, an interruptible power supply device for preventing breakage of the CPU, the hard disc or the like in the control unit at the time of blackout or the like are installed.

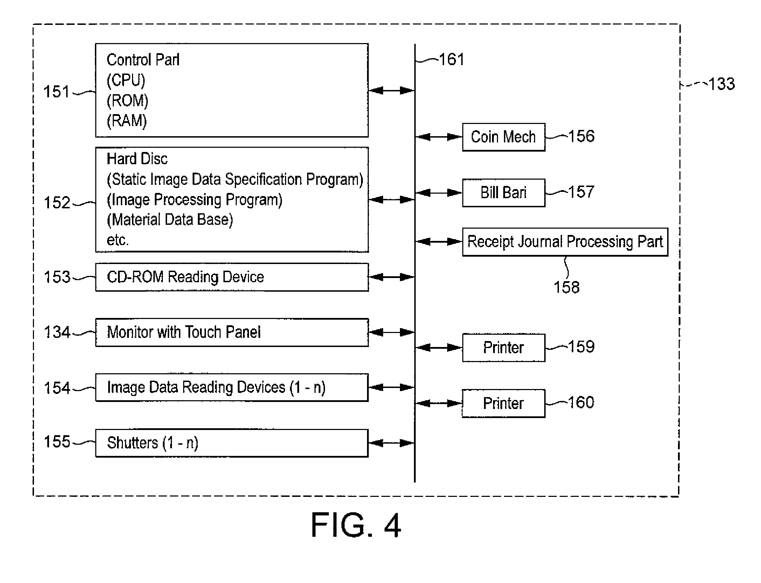

Fig. 4 shows a block diagram of shot image printing system 102 stored in the post type image outputting apparatus 133 shown in Fig. 3. The post type image outputting apparatus 133 comprises a control unit 151, a hard disc 152, a CD-ROM reading device 153, a monitor 134 with a touch panel , n sets of image data reading devices 154, n sets of shutters 155, a coin mech 156, a bill bari 157, a receipt journal processing part 158, and two sets of printers 159, 160, and connected via a bus 161.

The control unit 151 of the post type image outputting apparatus 133 comprises a CPU, a ROM, and a RAM for controlling the drive of the devices connected via the bus according to a program stored in the hard disc 152 as a large scale memory medium. In the hard disc 152, programs for controlling the drive of the devices, such as a reading program corresponding to each recording medium, an opening/closing control program for the shutters, a fee charging program or the like, as well as a static image specification program for specifying a best shot from the dynamic image input by replaying the dynamic image and selecting the desired scene, an image processing program for processing an input image, a material data base storing information of frames to be used for the image synthesis, or the like, are stored so as to be read out as needed and stored in the RAM for driving various devices. The CD-ROM reading device 153 is used for upgrading the version of programs or any information stored in the ROM or the hard disc of the post type image output apparatus such that a CD-ROM for upgrading the version is inserted in the CD-ROM reading device 153 for rewriting the data with the terminal part switched to the administration mode by the maintenance key.

In Fig. 4, by selecting and executing the touch panel buttons displayed on the monitor 134 with a touch panel according to the operation guidance displayed on the monitor 134 with a touch panel, a series of the operation for choosing of the printing mode and reading of the dynamic image data to the output of a printed article can be executed. In this embodiment, first, the menu of the printed article is selected according to the operation guidance displayed on the monitor 134 with a touch panel , and in case the touch panel button is pressed, an operation screen for guiding the input of the image data is shown on the monitor 134 with a touch panel. The customer can direct which shall be used between a dynamic image data or static image data as original image data in this guidance screen.

The image data reading devices 154 include various reading devices 1 to n corresponding to various kinds of recording media so that the customer can input dynamic image datum or static image datum recorded in a recording medium the customer has into the terminal part 2 by using the corresponding reading device, after the designation of either the dynamic image or the static image to be read in the above guidance screen. The image data reading devices 154 also include a scanner so that an static image can be read out from a printed article, processed to be digital data, and inputted into the post type image output apparatus 133. In case the image data reading devices 55 are not dedicated for reading but also they can record image data in a recording medium, the customer can store the image data of the edited image produced by operating the the post type image output apparatus 133 and take it home with the customer. The shutters 155 are provided at the recording medium insertion ports of the reading devices 1 to n so that the taking out operation of the recording medium can be prohibited during the reading process, or until the fee charging process is completed by port or closing the recording medium insertion port.

When the dynamic images provided by the customer are inputted as digital data using the image data reading devices 154 according to the operation guidance on the monitor 134 with a touch panel, the static image specification program is performed and the customer can choose the static image data which records the scene be printed or the static image data which records the image used as the material for editing the image to be printed. According to operation guidance of the monitor 134, the dynamic image input is reproduced on the screen of the monitor 134 in order to search the scene of best shot. Once the customer finds out his favorite scene, he may push the button which choose static image data, and thus, the customer can choose 1 or more static image data. At this time, playback speed can be made late, or a dynamic image can be stopped, so as that a best shot can be chosen easily.

The screen of the monitor 134 with touch panel is divided into two , and at one of them the dynamic image replays and at the other side the selected static images display in the thumb nail images as a list. The customer may delete a part of the temporary static image data, replace the order, or add another static image in any position, and finally he can specify the static image to be adapted.

An dynamic image is reproduced by one side of the screen which the screen of the monitor 134 with a touch panel is divided, and was divided, and a list indication of the selected static image is given in the form of the thumb nail image at another side. A user deletes a part from the static image data by which chose temporarily and it was indicated by the list, replaces an order, adds static image data to arbitrary ranking, and can specify the static image data which should finally be adopted.

When an static image is specified, an image processing program is executed according to a printing menu already selected. The customer can process the image, such as reduction, enlargement, rotation, deformation, synthesis with another image or the like according to the operation guidance on the monitor 134 with a touch panel. At the time, image materials stored in the material data base, such as picture frames can be utilized as well.

After completion of the edit of the image, according to the operation guidance on the monitor 134 with touch panel, the order content other than the printing menu and the process content, such as the number of prints, the print size or the like, is inputted. Also at this time, the order content can be input by pressing a button or ten keys displayed on the touch panel. In case a printing menu not requiring the edit of the original image is selected at the time of the start, the operation screen for guiding the edit operation is eliminated so that the operation guidance for guiding the other order content is displayed immediately.

After all the order content is inputted, on monitor 134 with the touch panel, the screen for the charged fee is displayed together with the order content and the fee payment is requested. When a coin is inserted and/or a bill is inserted to the post type image output apparatus 133 according to the payment request. the coin mech 156 and/or the bill bari 157 are driven so as to execute the fee charging process such as judgment of genuineness of the coin or bill inserted to the post type image output apparatus 133 for the fee payment, the judgment of the kind thereof, the amount calculation, the discharge of the change or the like. After finishing the fee charging process, the receipt journal part 154 prints the printing menu, the collected fee amount or the like on a receipt paper and discharges the receipt. The system can be set so as to eliminate the drive of the fee charging means in case request of the fee payment is not needed.

After the discharge of the receipt, the shutter is opened so as to enable taking out of the inserted recording medium so that the operation screen for guiding the take-out of the recording medium is displayed on the monitor 134. When the recording medium is taken out, a printed article is output by the printer 159 or 160. The printer 159 can output a standard size printed article with a standard image quality, and the printer 160 can output a pre-cut seal printed article.

Next, the motion of the dynamic shot printing system of the present invention will be explained with reference to a flow charts and the indication on the monitor 134 with a touch panel, as the post type image output apparatus 133 shown in Figs. 3 and 4.

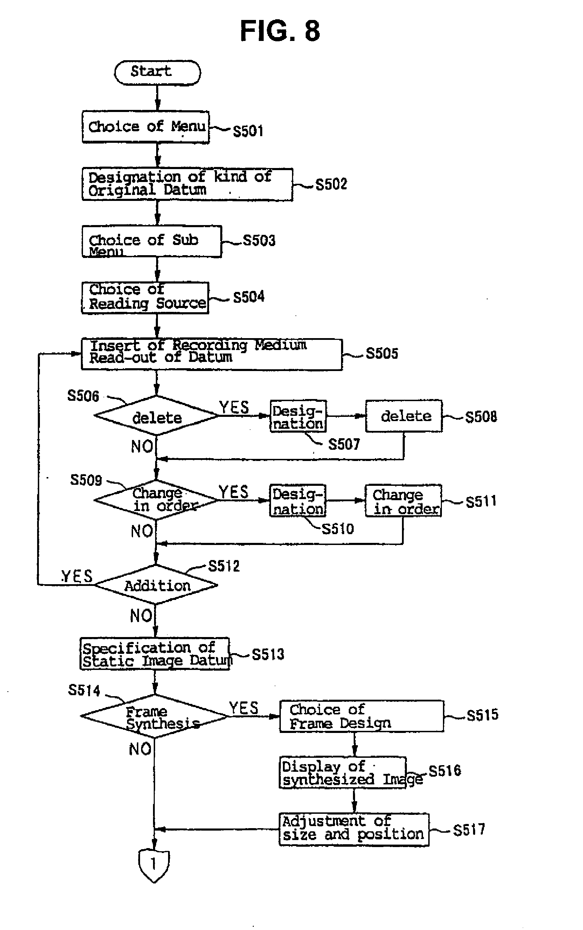

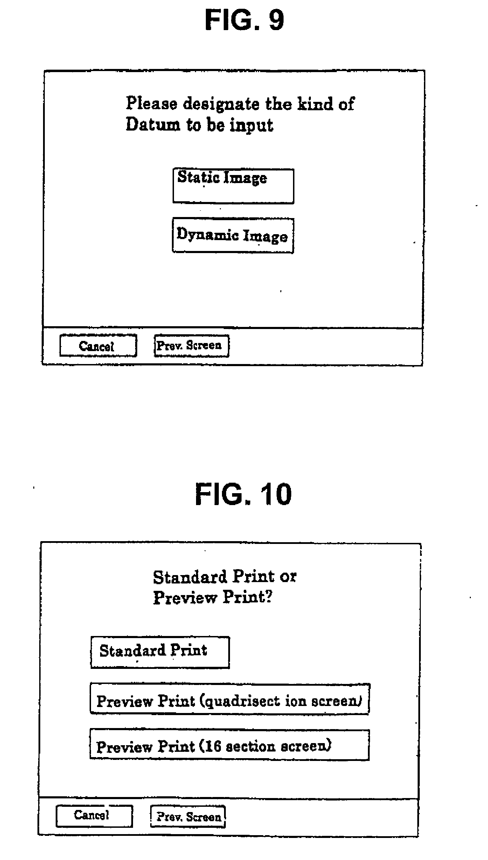

A start screen as shown in Fig. 8 of the parent application EP1182862 is displayed on the screen of the monitor 134 with a touch panel in the post type image output apparatus 133. In case an optional position of the start screen is touched by a hand, a main menu screen as shown in Fig. 9 as illustrated in the parent case is indicated. In case the main menu screen is left for a predetermined time, it returns to the start screen. In the main menu screen, the kinds of the printed articles to be selected are shown. Specifically, touch panel buttons for the "digital photo", the "frame synthesis", the "index print", the "seal", the "certification photograph", and the "postcard print" are shown in the upper and lower two rows. In the main menu screen, if "photo edit" is chosen, the printed article of the image plus event information can be created.

In case the "digital photo" is selected in the main menu screen and the touch panel button thereof is touched, a print out can be provided by reading the dynamic or static image data from a smart medium, a PC card, a compact flash card, a CD-ROM, or a flexible disc (FD), or reading the image data from a printed article such as a photograph using a scanner.

In case the "flame synthesis" is selected, a print out can be provided by reading the dynamic or static data from a smart medium, a PC card, a compact flash card, a CD-ROM, or a flexible disc (FD), or reading the image from a printed article such as a photograph using a scanner, and synthesizing the read out image with a frame which is provided by the system.

In case the "index print" is selected, an index print with a thumb nail image displayed can be printed out by reading the image data from a smart medium, a PC card, a compact flash card, a CD-ROM, or a flexible disc (FD).

In case the "seal" is selected, a pre-cut seal can be printed out by reading the dynamic or static image data from a smart medium, a PC card, a compact flash card, a CD-ROM, or a flexible disc (FD), or reading the image data from a printed article such as a photograph using a scanner, and synthesizing the read out image and a frame prepared by the system side. In the pre-cut seal, a plurality of small screens (frames) of the same image are printed, with each small screen divided by half cut.

In case the "certification photograph" is selected, an image for the certification photograph is taken by a digital camera in the store so as to be stored in a flexible disc, and then, the stored image data are read out by the main body so that they can be printed out after selecting the size from the driver's license size, the curriculum vitae size, the passport size, and the visa size, and selecting color or monochrome.

In case the "post card print" is selected, a print can be provided by reading the dynamic or static image data from a smart medium, a CF card, a flexible disc (FD), a PC card, or a CD-ROM, or reading the image data from a printed article such as a photograph using a scanner, producing the postcard data by processing the read out image, and reading the postcard data from the recording medium storing the same.

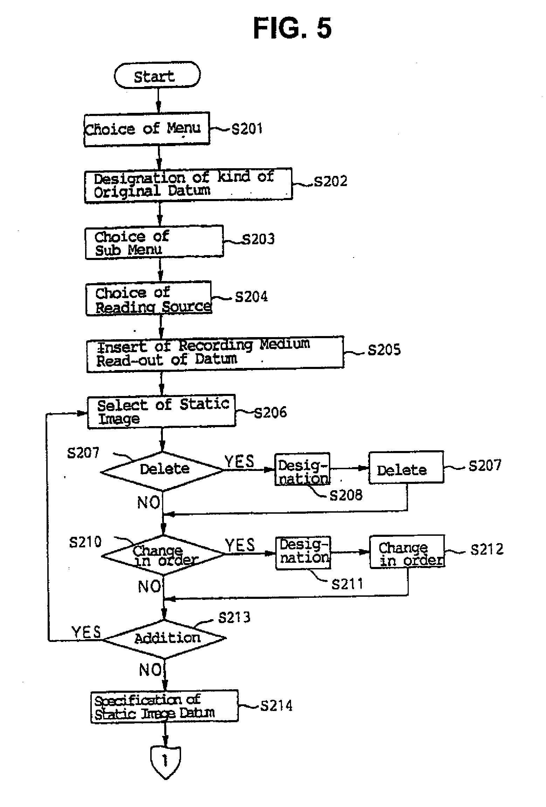

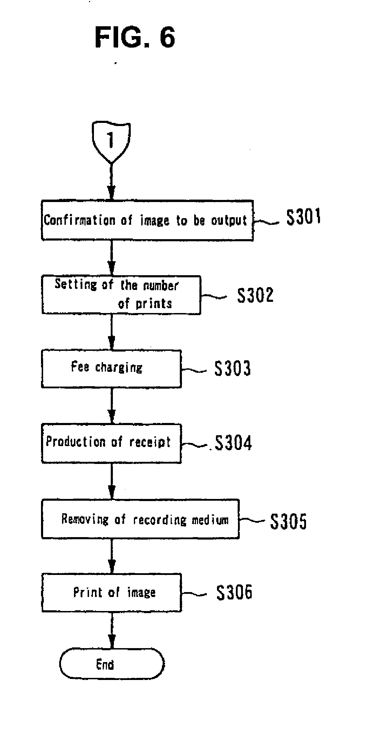

First, the procedure in case the "digital photo" is selected will be explained. If in the main menu screen the "digital photo" position is touched by a hand, the "digital photo" procedure shown in Figs. 5 and 6 is started (S201). In each operation screen to be indicated after the start of the "digital photo" procedure, in principle, a "cancel" button and a "return to the previous screen" button are provided so that it can return to the start screen by pressing the "cancel" button, and it can return to the operation screen of the previous step by pressing the "return to the previous screen" button so as to enable change of the operation.

In case the "digital photo" procedure is started, as shown in Fig. 9, the operation screen which designates the kind of original data is displayed, and either a static image or the dynamic images can be designated (S202). The message of "please designate the kind of data to be input" is shown laterally in the uppermost row in the operation screen at this time, and therebelow each touch-panel button of a "static image" and an "dynamic image" are perpendicularly arranged, and "cancel" button and the button "return to previous menu" are provided in the lowermost row.

When a dynamic image data is designated in this screen, as shown in Fig. 10, the operation screen of the sub menu which asks which shall be created between a standard print and a preview print will be displayed (S203). In the operation screen at this time, the message of "Standard print or preview print ?" is shown laterally in the uppermost row, and therebelow, each touch-panel button of a "standard print", "preview print (quadrisection screens)", and "a preview print (16 section screens)" are arranged perpendicularly, and "cancel" button and the "return to previous menu" button are provided in the lowermost row.

Here, a standard print prints one shot image on one screen. On the other hand, a preview print prints two or more shot images on one screen wherein the images are put in order, and for example, the continuation photographic playback showing a decomposed swing operation of golf may correspond to this type. Although a preview print are used as 4 section screen or 16 section screen as shown in the operation screen of Fig. 10, the number of section screen can be arbitrarily changed into a printing system by setup.

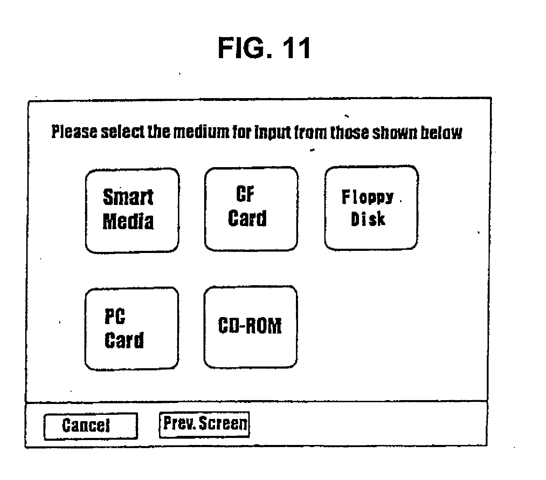

In this screen, if one of print form is designated, as shown in Fig. 11, an operation screen with the image data reading sources shown is indicated so that a reading source can be selected (S204). In the operation screen at the time, the message "please select the medium for input from those shown below" is shown laterally in the uppermost row, and therebelow, the touch panel buttons each with the name of the smart medium, the compact flash card (CF card), the flexible disc, the PC card, and the CD-ROM are shown. In the operation screen shown in Fig. 9, when a static image is chosen as original data, the touch-panel button which attached the name of a photograph (scanner) is displayed further. In the operation screen, in case a touch panel button is touched by a hand, the corresponding reading source is selected.

If any of the reading sources is selected from the smart medium, the CF card, the flexible disc, the PC card, and the CD-ROM, the operation screen showing the inserting method corresponding to the selected recording medium is indicated so that the recording medium can be inserted and the dynamic image can be read out (S205).

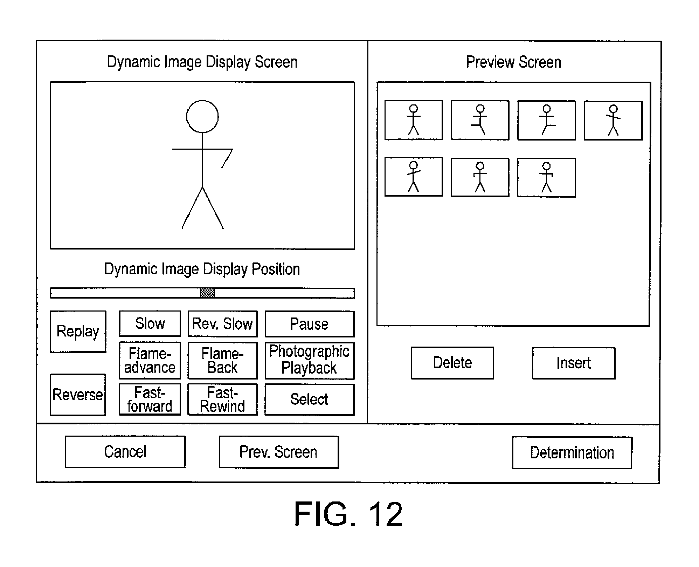

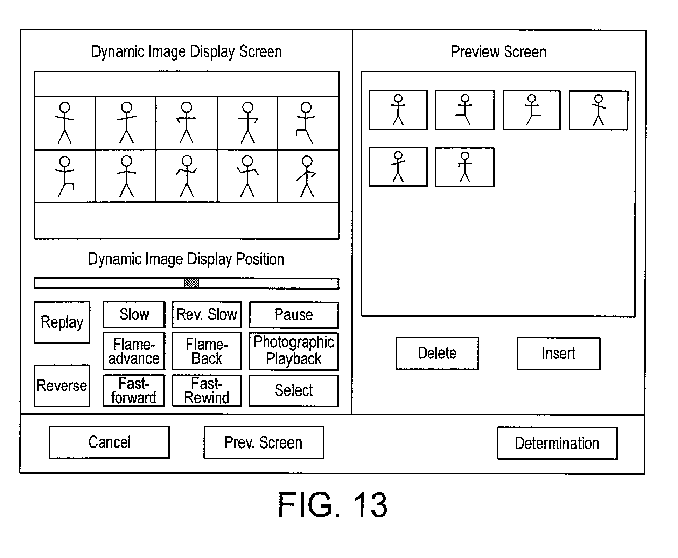

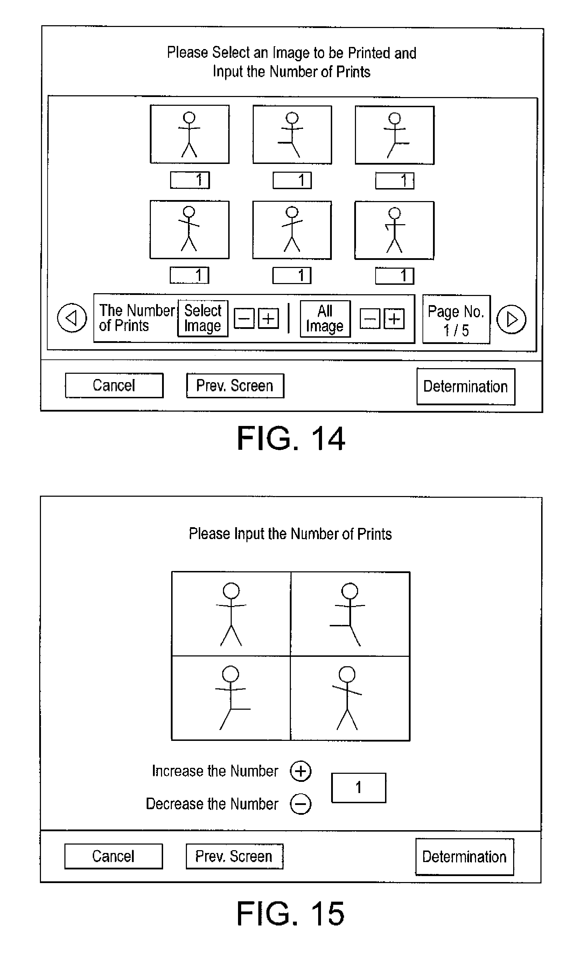

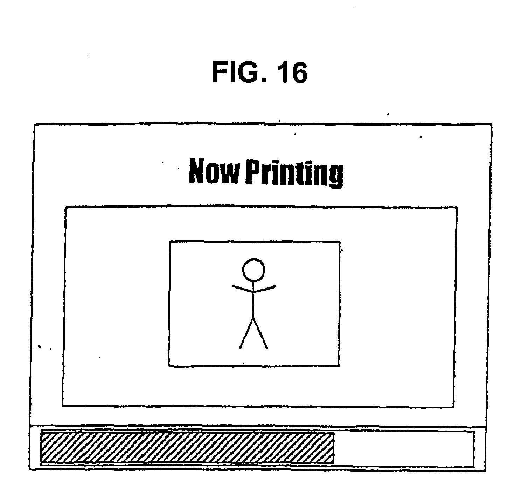

As shown in Figures 12 to 16 of the parent application, if the smart medium is selected, the message "please set the smart medium and press the reading start" is shown laterally in the uppermost row, and a "reading start" button is provided in the lowermost row together with the "cancel" button and the "return to the previous screen" button. Similarly, in case the CF card is selected, the operation screen of Fig. 13 of the parent case appears. In case the flexible disc is selected, the operation screen of Fig. 14 of the parent case appears. In case the PC card is selected, the operation screen of Fig. 15 of the parent case appears. And in case the CD-ROM is selected, the operation screen of Fig. 16 of the parent case appears.

In case a recording medium is inserted in the predetermined insertion port according to the guidance of the operation screen and the reading start button on the touch panel is touched by a hand, the insertion port with the recording medium inserted is closed by the shutter so as to start the reading operation of the image data.

After reading of a dynamic image data is completed, as shown in Fig. 12, the operation screen which specifies a best shot from the countless scene included in the dynamic image appears, and static image data can be chosen (S206). The operation screen at this time is divided into right and left. On the left-hand side of the operation screen, the dynamic image display screen which replays a dynamic image, the scale in which the display position (relative lapsed time to all reproduction time) of a dynamic image, and the touch-panel button group for directing reproduction of a dynamic image and selection of static image data was perpendicularly arranged, and on the right-hand, the preview screen which indicates by list the scene (static image) and touch-panel button group for performing choice of selected static image data and making a change of accumulation ranking is perpendicularly arranged. The "Determination" button , as well as the "return to the previous screen" button and the "cancel" button is provided to the lowermost row of an operation screen.

In this operation screen, if the replay button is pushed, the dynamic image will be reproduced on a dynamic image display screen, and if the reverse button will be pushed, reverse play will be carried out. The slow button makes playback speed late and the reverse slow button makes reverse play speed late. The frame-advance button playback each scene of a dynamic image frame-by-frame, the frame-back button returns each scene of a dynamic image frame-by-frame. The fast-forward button playback the dynamic image at high speed and the fast-rewind button reverse the dynamic image at high speed. The pause button makes a dynamic image temporary stop, and fixes one scene, and displays it on a screen.

The photographic playback button make a display of photographic playback which displays several frames of scene continuously wherein a scene reproduced when the button concerned is pushed becomes the basal frame, namely, as the starting point, the middle point, or the terminal point and it is in the form of continuation photographic playback. The usual reproduction will be resumed if the replay button is operated after operating the photographic playback button and displaying the photographic playback. In the example of Fig. 13, when the scene of Fig. 12 is reproduced by the dynamic image display screen, the photographic playback button is operated, and several scenes before and after the scene of Fig. 12 are displayed by making the scene of Fig. 12 into a middle point.

When a best shot appears on a dynamic image display screen, the static image data of a best shot can be chosen by operating the selection button. Usually, after pushing a pause button and fixing the image of a wish when it is made a slow motion and frame-by-frame advance and a best shot appears further if a reproduction button and a fast forward button are pushed, a dynamic image is reproduced and the scene of a best shot is approached, the static image data of a best shot can be easily chosen by pushing a selection button. When the reproduction screen has passed the best shot, it can wait to rewind by the inversion button or the rewind button, to make inversion speed late with a reverse slow button or a top return button if needed, and for a best shot to return. Moreover, when continuation photographic playback as shown in a dynamic image display screen in Fig. 13 is displayed, the surface of each photographic playback is a touch panel, and after touching and specifying a hand to be a favorite top, static image data can be chosen by touching a selection button.

A list of the static image which are selected by the operation of the selection button , chose and was accumulated is given on the preview screen in right-hand side. Early accumulation ranking is given to the selected order and each static image data is arranged in the direction of the right from the left in the uppermost row of a preview screen, henceforth, lowers the stage and is arranged rightward from the left one by one. In printing a preview image, the arrangement displayed on this preview screen turns into arrangement of each picture frame in a preview image as it is.

Each static image data which the selection button was operated and was chosen is in the state still accumulated temporarily. The frame of each static image arranged on the preview screen is in function to a touch-panel button, and can be deleted by touching and specifying a hand to be the frame of a static image which is not pleased, and touching a deletion button (S207, S208, S209). Moreover, by touching and specifying a hand to be a frame to make it move, touching an insertion button and touching the frame in the ranking of a change place with a hand after that changing an accumulation order, other frame advance according to movement of the specified frame by the ability making it move to the change place of a wish of the specified frame, or it winds and falls (S21 0, S211, S212).

Moreover, after making the deletion and ranking change of static image data which are accumulated, additional selection of the still newer static image data can be carried out (S213). The direct addition of the static image data can be carried out at the accumulation ranking of a wish by pushing an insertion button first, touching the frame in ranking adding to the next with a hand, and specifying an additional position, and operating a selection button, and choosing new static image data to add static image data to predetermined accumulation ranking directly.

Thus, if choice of static image data and correction of accumulation ranking end, a determination button is pushed and static image data is specified. Although static image data can be accumulated until fill the preview screen, it is not necessary to accumulate until it fills. Even when a standard print is specified in the screen of Fig. 10, two or more static image data can be specified, in that case, the parallel processing of two or more static image data is carried out in a following process, and the shot image from which a scene differs can be printed as an independent printed article. Moreover, when a preview print (four section screens) or a preview print (16 section screens) is specified in the screen of Fig. 10, several number of the specified static image data can be accumulated. For example, when a preview print (four split screens) is specified, static image data can be accumulated to four.

When static image data is specified, operation screens as shown in Fig. 14 or Fig. 15 appear and being able to check the image to be output, print number of sheets is specified (S301, S302). When a standard print is designated in the operation screen of Fig. 10, as shown in Fig. 14, the operation screen which indicated the thumb nail image of all the specified static images by the list appears.

In the operation screen at the time, the message "please select the image to be printed, and input the number of prints" is shown laterally in the uppermost row, and therebelow, total 6 thumb nail images are shown in the two rows laterally, with the column for inputting the number of prints provided to each thumb nail image. Below the thumb nail images, "+" and "-" buttons for increasing or reducing the number of prints, and "+" and "-" buttons for the total images are provided. By selecting a thumb nail image on the screen for selecting the image, and touching the "+" and "-" buttons for the "selected image", the number of prints for the selected image can be increased or reduced individually. In contrast, by touching the "+" and "-" buttons for the total images, the number of prints can be increased or reduced for all the images displayed on the screen.

In case the number of the thumb nail images so large than they cannot be shown on one screen, all the thumb nail images are shown, divided in a plurality of pages. The page number currently appearing on the screen and triangular scroll buttons for moving forward or backward among the pages are displayed on the screen in the same row as the buttons for increasing or reducing the number of prints. Moreover, in the lowermost row of the operation screen at the time, a "determination" button is provided together with the "cancel" button and the "return to the previous stage" button. By selecting the images to be printed in the operation screen, setting the number of prints for each image, and pressing the determination button, the order content is set.

On the other hand, when a preview print is specified in the operation screen of Fig. 10, as shown in Fig. 15, the preview image to be output is displayed. In addition, the preview image of four split screens is displayed in this example. In the operation screen at the time, the message "please input the number of prints" is shown laterally in the uppermost row, and therebelow, a preview screen of 4 section screen are shown, and below the 4 section screen, "+" and "-" buttons for increasing or reducing the number of prints, and the column for inputting the number of prints is provided. In the lowermost row of the operation screen at the time, a "determination" button is provided together with the "cancel" button and the "return to the previous stage" button. By setting the number of prints, and pressing the determination button, the order content is set.

When the order content is set, for example, as illustrated in Fig. 43 of the parent application No. EP1182862, the guidance screen for charging the fee appears for executing the fee charging process (S303) as shown in Fig. 6. In the guidance screen for the fee charging process, the message "please insert money" is shown laterally in the uppermost row, and therebelow, the number of order, the fee for one sheet (unit price), the total amount (sum of the charged amount), and the inserted fee (inserted amount) are shown laterally from above successively in fourth rows. When the amount inserted in the coin insertion port and/or the bill insertion port according to the explanation on the guidance screen reaches or exceeds the total charged amount, in case it is a mode for only confirming the total amount, the change is discharged from the change discharging port as needed, and a guidance screen for requesting the fee charge content appears (illustrated as Fig. 44 in the parent application). In the guidance screen at the time, the message "if it is okay, please press the confirmation button" is shown laterally in the uppermost row, and therebelow, the number of order, the fee for one sheet, and the total amount are shown laterally from above successively in three rows. In the lowermost row, the "confirmation" button is provided together with the "cancel" button and the "return to the previous screen" button. In the guidance screen, in case the confirmation button is touched, the fee charging process is completed so as to move to the next step.

When the fee charging process is completed, the fee receipt is published so as to be discharged from the receipt outlet port (S304). After producing the receipt, the operation screen for removing the recording medium, which is the reading source of the image data, appears, and furthermore, in case the recording medium is inserted in the reading machine, the shutter of the insertion port is opened (S305). In the operation screen in case the smart medium is inserted, the message "please remove the smart medium and press the printing start" may be shown laterally, and a "printing start" button is provided. Similarly, in case the CF card is inserted, another operation screen appears. There are other screens when the flexible disc is inserted, the PC card is inserted, or the CD-ROM is inserted.

In case the recording medium inserted in the reading machine is removed and the printing start button is touched according to the guidance on the operation screen, the printing is started by the printer installed in the post type image output means (S306). During the printing process, the guidance screen as shown in Fig. 16 appears. In the guidance screen at the time, the message "now printing" is shown laterally in the uppermost row, therebelow, the image being printed is shown, and below the image, a time line roughly indicating the proceeding state of the printing process is lit. When the printing process is finished, the printed article of the shot image is discharged from the printed article outlet port (standard printing) of the main body, and a finish screen appears. The finish screen in the meantime returns to the start screen.

In addition, when a static image is specified as original data in the operation screen of Fig. 9, all the static images currently recorded on recording media are read, and an operation screen as shown in Fig. 14 appears, it is indicated by list in the form of the thumb nail image, a image to print is chosen, and print number of sheets can be specified for every image.

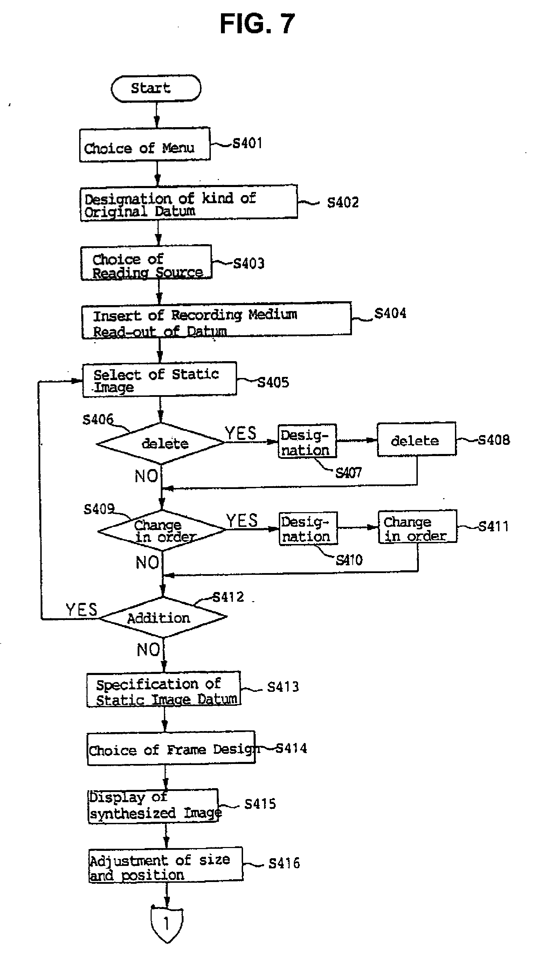

Next, the procedure at the time of choosing "frame synthesis" is explained. If the position of "frame synthesis" is touched with a hand in the main menu screen of above mentioned view 9, the procedure of "frame synthesis" as shown in Fig. 7 and Fig. 6 will start (S401). In addition, if the button will return to a start screen and "will return to a before screen" if "cancel" button and the button "return to the previous screen" are prepared for each operation screen displayed after the procedure of "frame synthesis" started in principle and "cancel" button is pushed is pushed, it can return to the operation screen in front of 1 stage, and operation can be redone.

If the procedure of "frame synthesis" starts, as shown in the view 53 as stated above, the operation screen which specifies the kind of original data is displayed, and either a static image or the dynamic images can be specified (S402). If a dynamic image data is specified in this screen, as shown in Fig. 11, the operation screen which enumerated image data's reading origin is displayed, and either reading origin can be chosen (S403). In addition, although the operation screen of view 54 is omitted in this example since only a standard print can be performed in the procedure of "frame synthesis", it can also set up so that a preview image can be edited in the procedure of frame synthesis. In this operation screen, if one of touch-panel buttons is touched, reading origin will be chosen, recording media can be inserted and reading of a dynamic image data will be performed (S404).

After reading of a dynamic image data is completed, as shown in Fig. 12, the operation screen which specifies a best shot from the countless scene included in the dynamic image appears, and static image data can be chosen (S405-S413). The process which specifies this static image data is the same in the procedure of a digital photograph.

If static image data is specified, the operation screen which enumerated frames is displayed, and one of frames can be chosen (S414). In the operation screen at this time, the message of "please choose a favorite frame design" is laterally written by the uppermost row, below this massage, the frame designs are enumerated, and "cancel" button, the button "return to previous screen", the "expansion display" button, and "determination" button are provided in the lowermost row. A frame design is called from a material database and displayed on a screen.

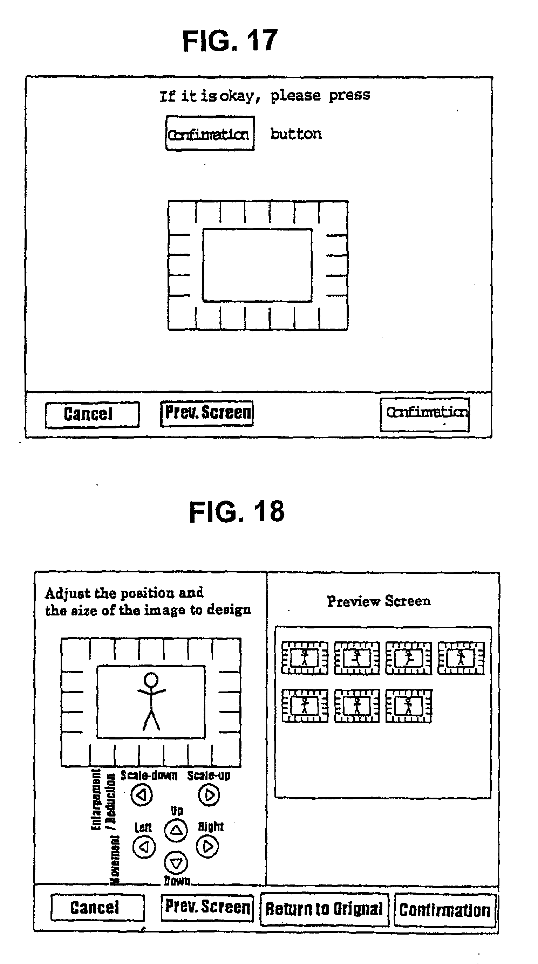

In case the enlarged display button is touched after touching one of a frame displayed on the screen, as shown in Fig. 17, the enlarged image of the selected frame is shown. In the operation screen at the time, the message "if it is okay, please press the confirmation button" is shown laterally in the uppermost row, and below the message, the enlarged frame design is shown. In the lowermost row, the "confirmation button" is provided together with the "cancel" button, and the "return to the previous screen" button. In case the customer does not like the enlarged frame, by touching the return to the previous screen button, the screen with the frames listed can be shown so that another frame can be selected.

In case the determination button is touched immediately after selecting the frame in the screen of Fig. 39 of the parent application, or in case the confirmation button is touched after indicating the enlarged image in the screen of Fig. 17, the frame to be used is set. In addition, when "no frame" is chosen since it becomes the procedure of performing the usual print of a digital photograph, the screen immediately shown in Fig. 14 is displayed.

If a frame is decided, while an operation screen as shown in Fig. 18 will appear and the synthesized image will be displayed, the size and the position of a static image and a frame can be adjusted (S415, S416). The operation screen at this time is divided into right and left, on the left-hand side of the operation screen concerned, the message of "please adjust the position and size of a image according to a design" is laterally written in the uppermost row, the edit screen which displays the synthesized image of the static image data and the frame which have been set as the object of edit on the message bottom is prepared, and the touch-panel button group of expansion reduction and movement is prepared in the bottom of it. On the other hand, the preview screen of a synthesized image is displayed on the right-hand side of an operation screen. Furthermore, "cancel" button, the "return to the previous screen" button , the button "reset", and the "confirmation" button are prepared in the lowermost row,

In this operation screen, each frame of a preview screen serves as a touch panel, if hands are touched and specified to be one of frames, it can be displayed on an edit screen, and the size of the read image can be changed by touching expansion or reduction button can be changed. Thus, the image can fit with a frame, and the position of a image can be adjust with a frame by touching each vertical and horizontal move button. If the reset button is touched, it will return to original image size and an original position. By repeating similar operation , The edition work can be separately done about each static image data. However, it is also possible to set up so that any one may be made into representation and image edition may be performed thereto, when two or more static image data is accumulated. Such a setup is effective when synthesizing a frame for each frame of a preview image including the seal print mentioned especially later.

If a synthesized image is decided, while the operation screen same with being shown in Fig. 14 appears and being able to check the image to be output, print number of sheets can be set up (S301, S302). After this, the process shown in Fig. 50 similarly in the procedure of a digital photograph is performed, and the printed article of the shot image which synthesized the frame is obtained (S303-S306).

Next, the procedure at the time of choosing a "seal" is explained. If the position of a "seal" is touched with a hand in the above mentioned main menu screen, the procedure of a "seal" as shown in Fig. 8 and Fig. 6 will start (S501), and the pre-cut seal divided into two or more small screens will be obtained. In addition, in each operation screen to be indicated after the start of the "seal" procedure, in principle, a "cancel" button and a "return to the previous screen" button are provided so that it can return to the start screen by pressing the "cancel" button, and it can return to the operation screen of the previous step by pressing the "return to the previous screen" button so as to enable change of the operation.

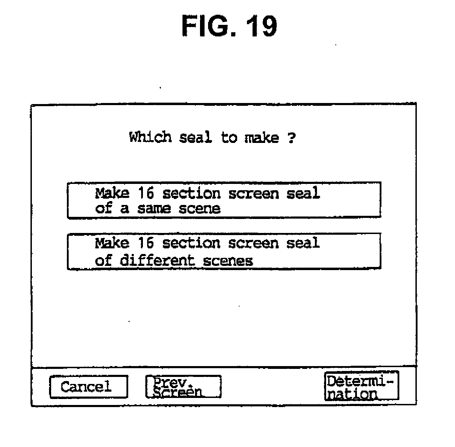

If the procedure of a "seal" starts, as shown in the view 53 as stated above, the operation screen which specifies the kind of original data is displayed, and either static image or dynamic images can be specified (S502). If a dynamic image data is specified in this screen, as shown in Fig. 19, the operation screen which specifies whether the small screens of several scenes or the small screens of the same scene should be printed will appear (S503). In the screen at this time, the message of "which seal do you want ?" is laterally written by the uppermost row, the touch-panel button of the choice "making 16 section screens with a same scene" and "making 16 section screen with different scenes" are arranged perpendicularly, and at the lowermost raw the "cancel" button, the "return to the previous screen" button , and "determination" button are provided. If either is chosen on this operation screen, as shown in Fig. 11, the operation screen which enumerated image data reading source is displayed, and either reading source can be chosen (S504). In this operation screen, if one of touch-panel buttons is touched, reading source will be chosen, recording media can be inserted and reading of a dynamic image data will be performed (S505).

After reading of a dynamic image data is completed, as shown in Fig. 12, the operation screen which specifies a best shot from the countless scene included in the dynamic image appears, and static image data can be chosen (S506-S513). In the operation screen of Fig. 19, when printing only the small screen of the same scene is chosen, only one static image data is specified. Moreover, in the operation screen of Fig. 63, when printing the small screen where scenes differ is chosen, static image data can be specified up to 16 pieces. The process which specifies this static image data is the same in the procedure of a digital photograph.

If static image data is specified, the operation screen which enumerated frames can be displayed. a frame can be chosen according to guidance on an operation screen, and a frame can be synthesized on each smallness screen (S515-S517). However, when a touch-panel button without a frame is chosen, the process of frame synthesis can be skipped. In the procedure of a "seal", frame synthesis can be performed similarly in the procedure of "frame synthesis."

If a synthesized image is decided, while the operation screen same with being shown in Fig. 14 appears and being able to check the image to be output, print number of sheets can be set up (S301, 5302). After this, the process shown in Fig. 6 similarly in the procedure of a digital photograph is performed, and the printed article of the pre-cut seal which arranged the shot image of the small screen which synthesized the frame is obtained (S303-S306).

With the dynamic image shot printing system described, by combining freely the original dynamic image contents and/or original static image contents brought by a user with dynamic image contents and/or static image contents possessed by the system or originally obtainable by the system side, a new image can be easily synthesized and easily printed out.

Moreover, if the owner of a dynamic image data can specify a shot image from a dynamic image data personally by using the post type image outputting apparatus, it is possible to delete such inconveniences that the customer should specify a static image data from the dynamic image data in advance to go to print shop, or asking the clerk of print shop to specify the static image by replaying the dynamic image in front of the clerk, and possible to easy access and use the system.

Moreover, since it is possible that the post type image output apparatus is provided with an image processing system of business-use and advanced performance and a printer of high performance, by using such a post type image outputting apparatus, the owner of a dynamic image data can make advanced edit freely to the shot image of a dynamic image by his hand, obtain the shot image of a dynamic image being printed on special goods, and the printed article of a dynamic image shot with difficult creation which are not be easily created by the personal computer and printer at a home.

## Claims

1. A dynamic-shot printing system comprising:
a dynamic image data procurement means (111) for obtaining a dynamic image data,
a static image data specifying means (112) for specifying a scene recorded in the dynamic image data as the static image,
an order inputting means (113) for inputting orders for an image to be output,
an output content designation data producing means (114) for preparing an output content designation datum which records the image to be output and appendix conditions for the image on the basis of the obtained static image data and the input orders, and
a printing means (115) which prints out an printed article of the image in accordance with the output content designation datum.

2. A dynamic-shot printing system as claimed in Claim 1, which further comprises an editing means for editing the specified static image datum to the image to be output.

3. A dynamic-shot printing system as claimed in Claim 2, which further comprises an static image inputting means for inputting a static image datum, in addition to a dynamic image inputting means (110) for inputting a dynamic image datum as the dynamic image procurement means.

4. A dynamic-shot printing system as claimed in Claim 2, which further comprises an static image database for storing static image data, in addition to a dynamic image inputting means (110) for inputting a dynamic image datum as the dynamic image procurement means.

5. A dynamic-shot printing system as claimed in Claim 2, which further comprises an static image inputting means for inputting a static image datum, in addition to a dynamic image database for storing dynamic image data as the dynamic image procurement means.

6. A dynamic-shot printing system as claimed in Claim 2, which further comprises an static image database for storing static image data, in addition to a dynamic image database for storing dynamic image data as the dynamic image procurement means.

7. A dynamic-shot printing system as claimed in Claim 2, wherein the dynamic image procurement means comprises a dynamic image inputting means for inputting a dynamic image datum and a dynamic image database for storing dynamic image data.

8. A dynamic-shot printing system as claimed in any preceding claim, wherein the static image data specifying means comprises a dynamic image viewing means for playing the input dynamic image datum and displaying the dynamic image, and a static image selecting means for selecting a scene displayed in the dynamic image viewing means as the static image datum.

9. A dynamic-shot printing system as claimed in Claim 8, wherein the dynamic image viewing means further comprises a playback speed control means for controlling the playback speed of reproduced dynamic image to be in slow motion or frame-by-frame advance at a choice timing.

10. A dynamic-shot printing system as claimed in Claim 9, wherein the dynamic image viewing means further comprises a photographic playback producing means for converting the reproduced dynamic image into a photographic playback at a choice timing.

11. A dynamic-shot printing system as claimed in Claim 8, wherein the dynamic image viewing means further comprises a pausing means for pausing the reproduced dynamic image at a choice timing.

12. A dynamic-shot printing system as claimed in Claim 1, wherein the static image data specifying means (112) further comprises a static image data storing means for storing 2 or more static image data while giving a storing number in order to each image datum.

13. A dynamic-shot printing system as claimed in Claim 12, wherein the static image data storing means further comprises a storing adjustment means which can delete a part of or all of stored static image data, and modify the storing number.

14. A dynamic-shot printing system as claimed in Claim 12, wherein the static image data storing means further comprises a pre-view displaying means for displaying images of the stored static image data in order of storing.

15. A dynamic-shot printing system as claimed in Claim 12, wherein the editing means is capable of editing separately 2 or more static image data stored in the static image storing means into the corresponding number of images to be output as printed articles.

16. A dynamic-shot printing system as claimed in Claim 12, wherein the editing means is capable of editing 2 or more static image data stored in the static image storing means into a pre-view image as the image to be output which displays the stored static images within a screen.
